# EUROPÄISCHE PATENTSCHRIFT

(11) **EP 2 639 603 B1**
(45) Veröffentlichungstag und Bekanntmachung des Hinweises auf die Patenterteilung: **02.12.2020**
(21) Anmeldenummer: 12166740.6
(22) Anmeldetag: 04.05.2012
(51) Int. Cl.: G01V 8/20

(54) **Sensoranordnung**
Sensor assembly
Dispositif de détection

(30) Priorität: 12.03.2012 DE 102012102069
(43) Veröffentlichungstag der Anmeldung: 18.09.2013
(73) Patentinhaber: Leuze electronic GmbH + Co KG, 73277 Owen/Teck (DE)
(72) Erfinder: Lohmann, Lutz, 82140 Olching (DE); Rohbeck, Vollker, 85244 Röhrmoos (DE)
(74) Vertreter: Ruckh, Rainer Gerhard

(56) Entgegenhaltungen:
- EP-A1- 1 978 378
- DE-A1-102006 005 152
- DE-A1-102007 035 248
- DE-B3-102010 021 895
- DE-T2- 69 805 768
- DE-U1- 20 303 085
- DE-U1- 29 517 608
- JP-A- 2006 317 238
- US-A1- 2008 157 965

## Beschreibung

Die Erfindung betrifft eine Sensoranordnung gemäß Anspruch 1.

Eine derartige Sensoranordnung umfasst einen Master-Sensor in Form eines Lichtvorhangs sowie einen oder gegebenenfalls mehrere Slave-Sensoren, die an den Master-Sensor angeschlossen sind. Ein Lichtvorhang, der den Master-Sensor bildet, umfasst generell eine Sendereinheit mit einem ersten Gehäuse, in welchem Lichtstrahlen emittierende Sender integriert sind, sowie eine Empfängereinheit mit einem zweiten Gehäuse, in welchem Lichtstrahlen empfangende Empfänger integriert sind. Mit den Lichtstrahlen des Lichtvorhangs wird ein flächiges Schutzfeld überwacht. Dabei ist jeweils ein Sender einem Empfänger zugeordnet, so dass bei freiem Schutzfeld die Lichtstrahlen dieses Senders auf den zugeordneten Empfänger treffen. In einer Auswerteeinheit des Lichtvorhangs wird zur Objekterfassung geprüft, ob die Strahlengänge eines oder mehrerer Lichtstrahlen unterbrochen sind. In Abhängigkeit hiervon wird in der Auswerteeinheit ein binäres Schaltsignal über einen Schaltausgang ausgegeben, wobei die Schaltzustände des Schaltsignals angeben, ob sich ein Objekt im Schutzfeld befindet oder nicht. Mit einem solchen Lichtvorhang erfolgt eine Gefahrenbereichsüberwachung an sicherheitskritischen Anlagen. Wird mit dem Lichtvorhang ein Objekt erfasst, wird durch das entsprechende Schaltsignal des Lichtvorhangs wenigstens eine gefährliche Bewegung der Anlage gestoppt.

Ein erstes Beispiel für eine Sensoranordnung mit einem Lichtvorhang als Master-Sensor ist eine sogenannte Kaskade von mehreren Lichtvorhängen. In diesem Fall ist der Slave-Sensor selbst von einem Lichtvorhang gebildet, der eine Sendereinheit mit einem Gehäuse aufweist, in dem Lichtstrahlen emittierende Sender angeordnet sind, und der eine Empfängereinheit mit einem zweiten Gehäuse aufweist, in dem Lichtstrahlen emittierende Empfänger angeordnet sind. Zur Ausbildung der Kaskade werden die Gehäuse der Sendereinheiten der Lichtvorhänge miteinander über Kabel oder anderweitig verbunden. Weiterhin werden die Gehäuse der Empfängereinheiten über Kabel miteinander verbunden.

Ein weiteres Ausführungsbeispiel einer Sensoranordnung mit einem Lichtvorhang als Master-Sensor kann derart ausgebildet sein, dass als Slave-Sensor Muting-Sensoren angeschlossen sind, die allgemein als optische Sensoren, insbesondere als Lichtschranken, ausgebildet sind. Mit derartigen Muting-Sensoren können bestimmte zulässige, nicht sicherheitskritische Objekte erfasst und identifiziert werden, die anders als sicherheitskritische Objekte nicht zu einem Ansprechen des Lichtvorhangs führen sollen, um ein unnötiges Stillsetzen einer Anlage durch das Schaltsignal des Lichtvorhangs zu vermeiden. Daher erfolgt mit den Muting-Sensoren ein sogenanntes Muting, das heißt Stummschalten des Lichtvorhangs bei Erkennen eines zulässigen Objekts. Das zulässige Objekt kann somit das Schutzfeld passieren, ohne dass das Lichtvorhang anspricht.

Bei beiden Arten von Sensoranordnungen ist vor Inbetriebnahme eine Konfiguration der Sensoranordnung vorzunehmen. Typischerweise muss mit einer Konfigurationseinheit wie zum Beispiel einer externen Rechnereinheit die Konfiguration des Master-Sensors und des oder der Slave-Sensoren separat eingestellt werden. Zur Vorgabe der Konfiguration müssen beispielsweise bestimmte Parameterwerte für den Master-Sensor und auch für den oder die Slave-Sensoren vorgegeben werden.

Diese Art der Konfiguration ist nicht nur umständlich sondern auch fehleranfällig, da der Anwender die Konfiguration des Master-Sensors und des Slave-Sensors aufeinander abstimmen muss.

Die DE 10 2010 021 895 B3 betrifft eine Sicherheitssensoranordnung mit wenigstens zwei Sicherheitssensoren. Jeder Sicherheitssensor weist zwei Sicherheitsschaltausgänge auf, über welche ein im jeweiligen Sicherheitssensor generiertes Schaltsignal ausgebbar ist. Die Schaltzustände des Schaltsignals werden über Halbleiter-Schaltelemente im Sicherheitsschaltausgang vorgegeben. Die Sicherheitsschaltausgänge der Sicherheitssensoren sind über eine Parallelschaltung derart verknüpft, dass eine funktionale Verundung der Sicherheitsschaltausgänge erhalten wird.

Die EP 1 978 378 A1 betrifft eine optoelektronische Sensoranordnung mit einem Gehäuse , in welchem wenigstens ein Lichtsender und/oder ein Lichtempfänger angeordnet ist, wobei das Gehäuse im Wesentlichen quaderförmig mit vier Längsseiten und zwei Stirnseiten ausgebildet ist, wobei an dem Gehäuse wenigstens ein erstes Kontaktelement zur elektrischen Kontaktierung der optoelektronischen Sensoranordnung und wenigstens ein Befestigungselement zur Befestigung des Gehäuses angeordnet sind. Um eine kostengünstige, montagefreundliche und platzsparende Befestigungsmöglichkeit für eine optoelektronische Sensoranordnung bereitzustellen, wird vorgeschlagen, dass das wenigstens eine erste Kontaktelement und das wenigstens eine Befestigungselement an einer der Längsseiten angeordnet sind.

Die JP 2006317238 A betrifft eine Sensoranordnung mit wenigstens einem Lichtvorhang. Der Lichtvorhang umfasst eine Sendereinheit mit einer Anzahl von Lichtstrahlen emittierenden Sendern. Die Sendereinheit kann eine Master-oder Slave-Funktion aufweisen, wobei diese Einstellung mit einem Master-Slave-Schaltkreis erfolgt. Weiterhin kann mittels eines Control circuit und externen Speichermitteln, wie einem USB-Stick oder einer Speicherkarte die Anzahl von Busteilnehmern ermittelt werden.

Die DE 295 17 608 U1 betrifft eine Wiederbereitschaftsschalteinrichtung für Personenförderanlagen, insbesondere für eine Rolltreppe oder einen Rollsteig, die bzw. der mit einer Vielzahl von aus nahe des Treppen- bzw. Palettenbandes im Sockelbereich angeordneten Sendern und Empfängern bestehenden Lichtschranken ausgerüstet ist, deren Signale mindestens einer Auswertelektronik zugeführt werden, die die Personenförderanlage nach Betätigen der Nothalttaste selbsttätig wieder in den Zustand der Einsatzbereitschaft versetzt.

Die DE 10 2007 035 A1 betrifft einen Sensor mit wenigstens einem Schaltausgang zur Ausgabe eines sicherheitsrelevanten Schaltsignals. Über den Schaltausgang sind weitere Daten ausgebbar und/oder einlesbar, wobei die Ausgabe der weiteren Daten die Schaltzustände des Schaltsignals unverändert lässt.

Die US 2008/0157965 A1 betrifft eine Sensoranordnung mit mehreren optischen Arrays, wobei ein optischer Array eine Master-Einheit und wenigstens ein weiteres optisches Array eine Slave-Einheit bildet.

Die DE 203 03 085 U1 betrifft ein Lichtgitter zur Erfassung von Objekten in einem Überwachungsbereich mit wenigstens einer Sendereinheit mit einer Anzahl von ortsfest in dieser angeordneten, Sendelichtstrahlen emittierenden Sendern mit wenigstens einer Empfängereinheit mit einer Anzahl von ortsfest in dieser angeordneten Empfängern, wobei jedem Sender ein Empfänger zur Bildung einer Strahlachse zugeordnet ist. Bei freiem Strahlengang sind die von dem jeweiligen Sender emittierten Sendelichtstrahlen auf den zugeordneten Empfänger geführt. In einer Auswerteeinheit erfolgt die Auswertung der an den Empfängern anstehenden Empfangssignale, wobei in dieser bei einer durch einen Objekteingriff im Überwachungsbereich bedingten Unterbrechung wenigstens einer Strahlachse ein Objektfeststellungssignal generiert wird. Zur Justage der Sender und Empfänger ist eine optische Ausrichtanzeigeeinheit mit wenigstens zwei Leuchtsegmenten vorgesehen, wobei jeweils ein Leuchtsegment aktiviert ist, wenn für eine dieser zugeordneten Strahlachse die Sendelichtstrahlen des Senders dieser Strahlachse auf den Empfänger dieser Strahlachse treffen.

Die DE 698 05 768 T2 betrifft eine Steuerung zur Verwendung mit einer Vielzahl von Bereichssensoren, um Bereichssensoren, zu steuern, wobei jeder von den Bereichssensoren eine Lichtprojektor und einen Lichtempfänger hat, und wobei jeder Lichtprojektor und jeder Lichtempfänger durch eine Vielzahl von optischen Pfade verbunden ist.

Die DE 10 2006 005 125 A1 betrifft eine Lichtschrankenanordnung, die zur Erfassung von Objekten in einem Überwachungsbereich dient und eine eine vorgegebene Anzahl von Sendern (7a-d) aufweisende Sendereinheit (2) und eine eine vorgegebene Anzahl von Empfängern (9a-d) aufweisende Empfängereinheit (4) umfasst. Bei freiem Überwachungsbereich sind von den Sendern (7a-d) emittierte Sendelichtstrahlen (6a-d) zu zugeordneten Empfängern (9a-d) geführt Bei einem Objekteingriff im Überwachungsbereich ist durch das Objekt der Strahlengang der von wenigstens einem der Sender (7a-d) emittierten Sendelichtstrahlen (6a-d) zum zugeordneten Empfänger (9a-d) unterbrochen, wodurch in der Empfängereinheit (4) eine Objektmeldung generiert wird. In der Sendereinheit (2) und in der Empfängereinheit (4) ist jeweils eine Speichereinheit (13,14) vorgesehen. In beiden Speichereinheiten (13,14) sind jeweils die Sender (7a-d) und die Empfänger (9a-d) kennzeichnende Parameter abgespeichert. Weiterhin ist in der Sendereinheit (2) und in der Empfängereinheit (4) jeweils eine Schnittstelleneinheit integriert. Über die Schnittstelleneinheiten sind die Parameter zwischen Sendereinheit (2) und Empfängereinheit (4) übertragbar.

Der Erfindung liegt die Aufgabe zugrunde, eine möglichst einfache und fehlerfreie Konfigurationsmöglichkeit für eine Sensoranordnung der eingangs genannten Art bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Sensoranordnung umfasst einen Master-Sensor in Form eines Lichtvorhangs und wenigstens einen Slave-Sensor in Form eines optischen Sensors. Mit dem Anschluss des Slave-Sensors an den Master-Sensor werden der Master-Sensor und/oder der Slave-Sensor selbsttätig konfiguriert.

Der Grundgedanke der Erfindung besteht somit darin, dass bei der erfindungsgemäßen Sensoranordnung allein durch den Anschluss des Slave-Sensors an den Master-Sensor eine selbsttätige Konfiguration durchgeführt wird. Ein wesentlicher Vorteil der Erfindung besteht dabei darin, dass diese Konfiguration die gesamte Sensoranordnung betrifft, das heißt es findet selbsttätig eine Anpassung von Master-Sensoren und Slave-Sensoren statt, so dass die damit ausgebildete Sensoranordnung als Kompletteinheit ohne weitere anwenderseitigen Konfigurationsvorgänge betriebsbereit ist.

Im Master-Sensor oder Slave-Sensor ist eine Konfiguration abgespeichert oder kodiert, die bei Anschluss an den Slave-Sensor oder den Master-Sensor in diesen übernommen wird.

Dabei umfasst eine Konfiguration eine bestimmte Betriebsart oder eine Anzahl von Parametern

Die Kodierung einer Konfiguration kann beispielsweise von einer bestimmten Anordnung oder Ausbildung von Sensorelementen des Slave-Sensors ausgebildet sein.

Generell ist vorteilhaft, dass die im Master-Sensor oder Slave-Sensor kodierten, beziehungsweise gespeicherten Konfigurationen so ausgebildet sind, dass damit die Sensoranordnung als Gesamtheit konfiguriert werden kann.

Eine Betriebsart kann beispielsweise die Ausbildung der Sensoranordnung als Kaskade von Lichtvorhängen sein. Im einfachsten Fall ist dabei an den, den Master-Sensor bildenden Lichtvorhang ein weiterer Lichtvorhang als Slave-Sensor angeschlossen. Der Lichtvorhang, der den Master-Sensor bildet, erfüllt seine Masterfunktion dadurch, dass dieser eine Auswerteeinheit aufweist, in der aus den Empfangssignalen aller Empfänger der Kaskade das Schaltsignal generiert wird. In dem Slave-Sensor dagegen wird kein Schaltsignal generiert, vielmehr werden die Empfangssignale der Empfänger des Slave-Sensors an die Auswerteeinheit des Master-Sensors weitergeleitet, wo das Schaltsignal generiert wird. Im einfachsten Fall kann der Slave-Sensor eine passive Einheit ausbilden, das heißt eine bloße Verlängerung der Kaskade mit mehreren Sender-/Empfängerpaaren bilden, das heißt der Slave-Sensor weist keine eigene Rechnereinheit zur Signalauswertung oder dergleichen auf. Alternativ kann der Slave-Sensor auch als eigenständiger, das heißt alleine funktionsfähiger Lichtvorhang ausgebildet sein. Dann weist der Slave-Sensor eine eigene Rechnereinheit zur Signalauswertung auf.

Generell kann eine Kaskade auch derart ausgebildet sein, dass mehrere Slave-Sensoren in Form von Lichtvorhängen gebildet sind, wobei jeweils die Gehäuse der Sendereinheiten einerseits und die Gehäuse der Empfängereinheiten eine Linearanordnung bilden, in der benachbarte Gehäuse über Anschlüsse verbunden sind.

Weiterhin kann zur Ausbildung einer Kaskade auch ein Slave-Sensor in Form eines Lichtvorhangs an den Master-Sensor angeschlossen sein. Der Slave-Sensor selbst weist Anschaltmittel wie eine Anschaltbox auf, an welche Aktoren oder optische Sensoren, insbesondere auch Lichtvorhänge angeschlossen werden können, die dann keine Slaves bilden und nicht Bestandteil der Kaskade sind.

Damit können die Sensoranordnungen variabel ausgestattet sein, um insbesondere auch komplexe Applikationen abdecken zu können. Auch bei derartigen komplexen Systemen wird durch den Anschluss eines Slave-Sensors an den Master-Sensor die gesamte Sensoranordnung konfiguriert.

Eine weitere mit dem Anschluss des Slave-Sensors an den Master-Sensor auswählbare Konfiguration ist eine Mutingfunktion als spezifische Betriebsart der Sensoranordnung. In diesem Fall sind der oder die Slave-Sensoren als Mutingsensoren ausgebildet. Diese können beispielsweis in Form von Lichtschranken oder auch in Form von Lichtvorhängen gebildet sein.

Zusätzlich zur Auswahl der bloßen Betriebsart Muting können mit dem Anschluss des Slave-Sensors an den Master-Sensor auch Parameter für dieses Muting festgelegt werden, wie beispielsweise die Zeitspanne zwischen dem Auslösen einer Mutingfunktion und deren Rücksetzung.

Als weitere mit dem Anschluss des Slave-Sensors an den Master-Sensor auswählbare Konfigurationen können Betriebsarten wie ein Blanking oder eine reduzierte Auflösung für den Lichtvorhang vorgesehen sein, der vom Master-Sensor alleine oder in Form einer Kaskade des Master-Sensors mit einem Slave-Sensor in Form eines weiteren Lichtvorhangs ausgebildet sein kann.

Bei der Betriebsart Blanking wird ein Blanking-Bereich des Lichtvorhangs umfassend eine vorgegebene Anzahl aufeinanderfolgender Sender-/Empfängerpaare vorgegeben. In einem Blanking-Bereich wird bei einem Objekteingriff von der Auswerteeinheit des Lichtvorhangs kein entsprechendes Schaltsignal generiert, das zu einem Abschalten der Maschine oder Anlage führen würde, wenn die registrierte Objektgröße, definiert durch die Anzahl aufeinanderfolgender Sender-/Empfängerpaare, bei welchen eine Strahlunterbrechung der Lichtstrahlen registriert wird, einen oberen Grenzwert nicht überschreitet und einen unteren Grenzwert nicht unterschreitet. Die Grenzwerte werden als Parameter bei der Gesamtkonfiguration der Sensoranordnung durch den Anschluss des Slave-Sensors an den Master-Sensor selbsttätig festgelegt.

Bei der Betriebsart reduzierte Auflösung wird bei dem Lichtvorhang ein einem Objekteingriff entsprechendes Schaltsignal nur dann erzeugt, wenn das detektierte Objekt eine bestimmte Mindestgröße aufweist. Die Mindestgröße ist wieder definiert durch eine vorgegebene Anzahl aufeinander folgender Sender-/Empfängerpaare, bei welchen eine Strahlunterbrechung des Lichtstrahls registriert wird. Die Mindestgröße wird als Parameter bei der Konfiguration der Sensoranordnung durch den Anschluss des Slave-Sensors an den Master-Sensor mit der Auswahl der Betriebsart "reduzierte Auflösung" festgelegt.

Gemäß einer ersten Variante der Erfindung ist zwischen einem Master-Sensor und einem Slave-Sensor ein vertauschbarer Anschluss vorgesehen.

In diesem Fall können ohne Beschränkungen unterschiedliche Slave-Sensoren an den Master-Sensor angeschlossen werden.

Gemäß einer zweiten Variante der Erfindung ist zwischen einem Master-Sensor und einem Slave-Sensor ein unverwechselbarer Anschluss vorgesehen.

In diesem Fall werden durch die spezifische Ausbildung des Anschlusses Restriktionen derart definiert, dass nur bestimmte Master-Sensoren an bestimmte Slave-Sensoren angeschlossen werden können, wodurch eine Vorauswahl derart getroffen wird, dass spezielle, ausgewählte Master-Sensoren durch spezielle, ausgewählte Slavefunktionen ergänzt beziehungsweise durch in spezifischen Slave-Sensoren hinterlegten Konfigurationen in spezifischer Weise konfiguriert werden.

Der Anschluss zwischen Master-Sensor und Slave-Sensor kann vorteilhaft mechanisch, beispielsweise in Form von Steckern ausgebildet sein. Alternativ kann der Anschluss zwischen Master-Sensor und Slave-Sensor als galvanisch getrennte Verbindung ausgebildet sein. Insbesondere kann eine berührungslose Verbindung, beispielsweise in Form einer Funkstrecke oder dergleichen, vorgesehen sein.

Eine unverwechselbare Ausbildung des Anschlusses kann auf elektrischem Weg erfolgen, indem über den Anschluss zwischen Slave-Sensor und Master-Sensor Signale mit definierten Kodierungen übertragen werden. Weiterhin kann eine unverwechselbare Ausbildung des Anschlusses auf mechanischem Weg erfolgen. Dies erfolgt vorzugsweise dadurch, dass die Anschlüsse ausbildende Stecker nach dem Poka yoke-Prinzip ausgeführt und dadurch unverwechselbar sind.

Die erfindungsgemäße Sensoranordnung kann vorteilhaft im Bereich der Sicherheitstechnik, insbesondere im Bereich des Personenschutzes eingesetzt werden. In diesem Fall sind der Master-Sensor und der oder die Slave-Sensoren als Sicherheitssensoren, das heißt als Sensoren, die die normativen Anforderungen für den Einsatz im Bereich der Sicherheitstechnik erfüllen, ausgebildet. Vorzugsweise erfolgt in diesem Fall über den Anschluss zwischen Master-Sensor und Slave-Sensor eine sichere, das heißt fehlersichere Datenübertragung. Eine solche Fehlersicherheit der Datenübertragung ist dagegen bei Sensoranordnung, die nicht im Bereich der Sicherheitstechnik eingesetzt werden, nicht erforderlich.

Mit derartigen Konfigurationsmitteln kann für einen Slave-Sensor eine Konfiguration vorgegeben werden, die dann bei Anschluss des Slave-Sensors an den Master-Sensor vom Master-Sensor übernommen wird. Ein Beispiel für derartige Konfigurationsmittel sind geeignete Stecker oder Kabelschnittstellen, insbesondere optische Konfigurationsstecker, bei welchen über Lichtsignale im Slave-Sensor bestimmte Konfigurationen vorgegeben werden. Weiterhin können auch bei einem beispielsweise als Lichtvorhang ausgebildeten Slave-Sensor dessen Lichtstrahlen zur Konfiguration genutzt werden. So kann in einem Parametriervorgang durch Vorgabe einer spezifischen Folge von Unterbrechungen bestimmter Lichtstrahlen eine Konfiguration im Slave-Sensor eingelernt werden.

Gemäß einer vorteilhaften Weiterbildung sind Mittel zur Erfassung von Kenngrößen des Lichtvorhangs vorgesehen. Abhängig von erkannten Kenngrößen wird eine Konfiguration des Lichtvorhangs selbsttätig vorgegeben. Die Kenngrößen sind von der Länge, der Auflösung, der Anschlussart oder dem Umfang vom Zubehör des Lichtvorhangs gebildet.

Die Länge des Lichtvorhangs definiert die Größe des überwachten Schutzfelds. Die Auflösung des Lichtvorhangs ist im wesentlichen durch den Abstand benachbarter Sender-/Empfängerpaare gegeben. Mit der Anschlussart sind spezifische Anschlüsse des Lichtvorhangs wie zum Beispiel unterschiedliche Busanschlüsse umfasst. Zubehör für den Lichtvorhang kann beispielsweise ein Signalgeber für die Anzeige eines Mutings, eine Ausrichthilfe oder dergleichen sein. Abhängig von diesen im Lichtvorhang selbsttätig erfassten Kenngrößen können selbsttätig im Lichtvorhang spezifische Konfigurationen, beispielsweise spezifische Ausbildungen eines Muting oder Blanking vorgegeben werden.

Für den Einsatz eines derartigen Lichtvorhangs im Bereich der Sicherheitstechnik ist eine fehlersichere Auswahl einer Konfiguration notwendig. Daher erfolgt auch die Erkennung der Kenngrößen des Lichtvorhangs fehlersicher, vorzugsweise mittels redundanter Rechnersysteme.

Die Erfindung wird im Folgenden anhand der Zeichnungen erläutert. Es zeigen:
- Figur 1:: Schematische Darstellung eines ersten Ausführungsbeispiels der erfindungsgemäßen Sensoranordnung.
- Figur 2:: Schematische Darstellung eines zweiten Ausführungsbeispiels der erfindungsgemäßen Sensoranordnung.
- Figur 3:: Schematische Darstellung eines dritten Ausführungsbeispiels der erfindungsgemäßen Sensoranordnung.

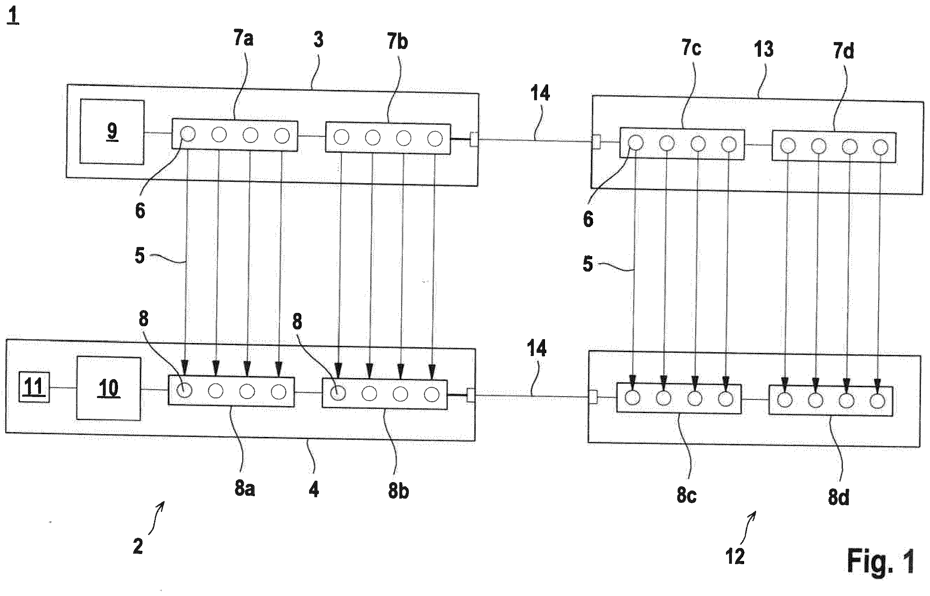

Figur 1 zeigt ein erstes Ausführungsbeispiel der erfindungsgemäßen Sensoranordnung 1. Die Sensoranordnung 1 umfasst als Master-Sensor einen Lichtvorhang 2 zur Erfassung von Objekten innerhalb eines Schutzfelds. Der Lichtvorhang 2 umfasst eine Sendereinheit, die in einem ersten Gehäuse 3 integriert ist, sowie eine Empfängereinheit, die in einem zweiten Gehäuse 4 integriert ist. Die Sendereinheit umfasst mehrere Lichtstrahlen 5 emittierende Sender 6 in Form von Leuchtdioden. Die Sender 6 sind in zwei Kaskaden 7a, 7b unterteilt, beispielsweise durch Anordnung auf zwei unterschiedlichen Leiterplatten. Die Empfängereinheit umfasst eine Anordnung von Lichtstrahlen 5 empfangenden Empfängern 8, die wie die Sender 6 in zwei Kaskaden 8a, 8b unterteilt sind. Die Empfänger 8 sind von Photodioden oder dergleichen gebildet.

In der Sendereinheit ist eine Steuereinheit 9 angeordnet, die die einzelnen Sender 6 zyklisch nacheinander aktiviert. Die Steuereinheit 9 besteht beispielsweise aus einem Microcontroller der ein Schieberegister steuert, mittels dessen die Sender 6 nacheinander aktiviert werden.

In der Empfängereinheit ist eine Auswerteeinheit 10 vorgesehen. Im einfachsten Fall besteht diese aus einem Microcontroller. Ist der Lichtvorhang 2 als Sicherheitssensor ausgebildet, besteht die Auswerteeinheit 10 aus zwei sich gegenseitig zyklisch überwachenden Microcontrollern oder allgemein Rechnereinheiten. An die Auswerteeinheit 10 ist weiterhin eine Ausgangsschaltung 11 mit einem Schaltausgang angeschlossen.

Jeweils ein Sender 6 und ein gegenüberliegender, zugeordneter Empfänger 8 bilden eine Strahlachse des Lichtvorhangs 2, das heißt ein Sender-/Empfängerpaar, wobei bei freiem Schutzfeld die Lichtstrahlen 5 des Senders 6 eines Sender-/Empfängerpaares ungehindert auf den Empfänger 8 dieses Sender-/Empfängerpaares treffen.

Über eine optische Synchronisation des Lichtvorhangs 2, beispielsweise durch eine den Lichtstrahlen 5 einer ausgewählten Strahlachse aufgeprägten Kennung, werden die Sender 6 und Empfänger 8 der einzelnen Sender-/Empfängerpaare immer zeitgleich aktiviert. Generell ist auch eine elektrische Synchronisation möglich.

Zur Objekterkennung erfolgt in der Auswerteeinheit 10 eine Amplitudenbewertung der Empfangssignale der Empfänger 8. In Abhängigkeit hiervon generiert die Auswerteeinheit 10 ein binäres Schaltsignal. Im Normalbetrieb, das heißt bei aktivierter Überwachungsfunktion, generiert die Auswerteeinheit 10 als Schaltsignal eine Objektmeldung falls wenigstens die Lichtstrahlen 5 einer Strahlachse durch einen Objekteingriff unterbrochen sind. Bei einer aktivierten Mutingfunktion wird dagegen der Lichtvorhang 2 stummgestaltet, das heißt auch bei einem Objekteingriff wird keine Objektmeldung generiert.

Die Generierung des Schaltsignals in der Auswerteeinheit 10 und dessen Angabe über den Schaltausgang stellt die Masterfunktion des vom Lichtvorhang 2 gebildeten Master-Sensors dar.

Die Sensoranordnung 1 umfasst neben dem Master-Sensor einen Slave-Sensor, der eine solche Masterfunktion nicht aufweist. Im vorliegenden Fall ist der Slave-Sensor ebenfalls von einem Lichtvorhang 12 gebildet, der ebenso wie der den Master-Sensor bildende Lichtvorhang 2 ein Gehäuse 13 mit einer Anordnung von Lichtstrahlen 5 emittierenden Sendern 6 aufweist, die auf zwei Kaskaden 7c, 7d verteilt sind. Weiterhin umfasst der den Slave-Sensor bildende Lichtvorhang 12 ein weiteres Gehäuse 13 mit einer Anordnung von Lichtstrahlen 5 emittierenden Empfängern 8, die ebenfalls auf zwei Kaskaden 8c, 8d aufgeteilt sind. Analog zu dem den Master-Sensor bildenden Lichtvorhang 2 bilden auch bei dem den Slave-Sensor bildenden Lichtvorhang 12 gegenüberliegende Sender 6 und Empfänger 8 Sender-/Empfängerpaare, das heißt Strahlachsen eines Lichtvorhangs 12. Im Gegensatz zu dem den Master-Sensor bildenden Lichtvorhang 2 weist der den Slave-Sensor bildende Lichtvorhang 12 keine Auswerteeinheit 10 und auch keine Steuereinheit 9 auf.

Die Sender- und empfängerseitigen Gehäuse 2, 3, 12, 13 des Master-Sensors und des Slave-Sensors werden zur Ausbildung der Sensoranordnung 1 über Anschlüsse in Form von Kabelverbindungen 14 verbunden. Prinzipiell können diese Einheiten auch galvanisch getrennt, insbesondere berührungslos über Funkstrecken oder dergleichen gekoppelt werden. Durch diesen Anschluss wird eine in einer nicht dargestellten Speichereinheit des Slave-Sensors abgespeicherte Konfiguration in den Master-Sensor eingelesen und in diesem als Gesamtkonfiguration für die Sensoranordnung 1 übernommen. Die im vorliegenden Fall vorgesehene Konfiguration sieht den Lichtvorhang 2 des Slave-Sensors als Verlängerung des Master-Sensors vor, das heißt es wird mit der Sensoranordnung 1 eine vergrößerte Optik-Kaskade mit einem durch die Sender-/Empfängerpaare des Master-Sensors und des Slave-Sensors gebildeten vergrößerten Schutzfeld bereitgestellt. Durch das Laden der Konfiguration des Slave-Sensors in den Master-Sensor erkennt der Master-Sensor die Sender-/Empfängerpaare des Slave-Sensors als Fortsetzung der Sender-/Empfängerpaare des Master-Sensors, das heißt der Betrieb der Sensoranordnung 1 entspricht den eines vergrößerten Lichtvorhangs 2, bei welchem alle Sender-/Empfängerpaare des Master-Sensors und dann des Slave-Sensors zyklisch nacheinander aktiviert werden.

Die Anschlüsse zwischen Master-Sensor und Slave-Sensor können einerseits vertauschbar ausgebildet sein, so dass beliebige Master-Sensoren und Slave-Sensoren gekoppelt werden können. Alternativ können die Anschlüsse auch unverwechselbar ausgebildet sein, so dass nur spezifische Master-Sensoren an spezifische Slave-Sensoren angeschlossen sein können.

Im vorliegenden Fall können an den Master-Sensor gemäß Figur 1 neben dem dort dargestellten Slave-Sensor weitere Slave-Sensoren angeschlossen werden.

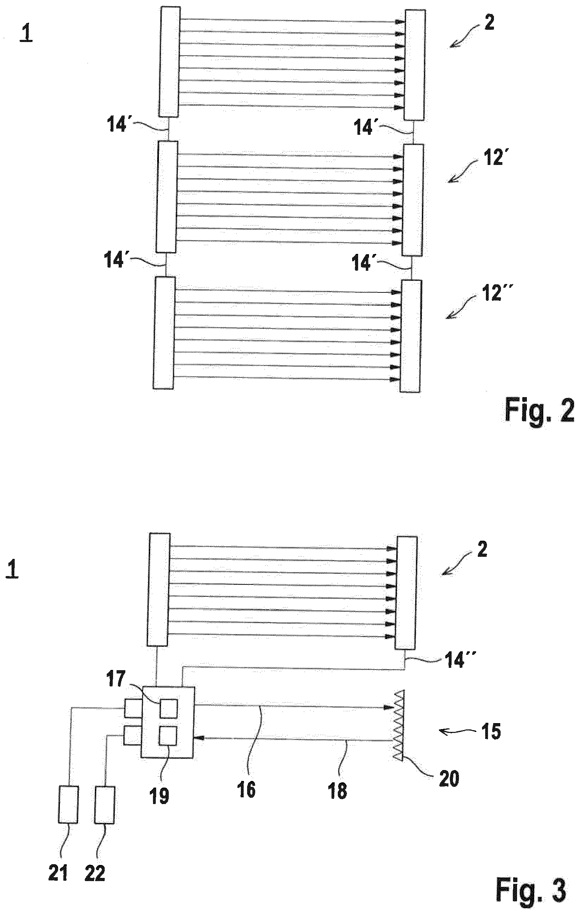

Ein erstes Beispiel hierfür zeigt Figur 2. Dort sind an das den Master-Sensor bildenden Lichtvorhang 2 zwei Lichtvorhänge 12', 12" über Kabelverbindungen 14' angeschlossen, die Slave-Sensoren bilden. Analog zur Ausführungsform gemäß wird durch den Anschluss der Slave-Sensoren an den Master-Sensor die gesamte Sensoranordnung 1 selbsttätig konfiguriert. Hierzu wird die im ersten Slave-Sensor, das heißt dem Lichtvorhang 12' hinterlegte Konfiguration in den Master-Sensor eingelesen und dort übernommen. Diese Konfiguration sieht vor, dass die Sender-/Empfängerpaare der Lichtvorhänge 12', 12" die Sender-/Empfängerpaare des Lichtvorhangs 2 ergänzen und so zu einer Erweiterung des Schutzfelds führen.

Figur 3 zeigt eine weitere Ausführungsform der erfindungsgemäßen Sensoranordnung 1. In diesem Fall ist an dem den Master-Sensor bildenden Lichtvorhang 2 eine Reflektionslichtschranke 15 als Slave-Sensor angeschlossen. Allgemein werden, je nach Applikation, mehrere derartiger Reflektionslichtschranken 15 als Slave-Sensoren an den Master-Sensor angeschlossen. Die Reflektionslichtschranke 15 weist in bekannter Weise ein Sendelichtstrahlen 16 emittierendes Sendeelement 17 und ein Empfangslichtstrahlen 18 empfangendes Empfangselement 19 auf. Bei freier Überwachungsstrecke gelangen die Sendelichtstrahlen 16 zu einem Retroreflektor 20 und werden von dort als Empfangslichtstrahlen 18 zu dem Empfangselement 19 geführt.

Die Reflektionslichtschranke 15 weist Anschaltmittel auf, an welche zwei Aktoren angeschlossen sind, wobei ein erstes Aktor ein Not-Aus-Taster 21 und ein zweiter Aktor ein Leuchtmelder 22 ist. Diese bilden keine Slave-Sensoren sondern eigenständige Einheiten.

Bei diesem Ausführungsbeispiel wird die Sensoranordnung 1 dadurch selbsttätig konfiguriert, dass bei Anschluss des Slave-Sensors an den Master-Sensor, das heißt bei Herstellung der Kabelverbindung 14", eine im Master-Sensor gespeicherte Konfiguration übernommen wird. Im vorliegenden Fall besteht die Konfiguration in einer Betriebsartauswahl derart, dass eine Mutingfunktion konfiguriert wird. Die oder alle die Slave-Sensoren bildenden Reflektionslichtschranke 15 bilden dann Mutingsensoren, mit denen spezifische zulässige, nicht sicherheitskritische Objekte erkannt und von sicherheitskritischen Objekten unterschieden werden. Wird von den Mutingsensoren ein zulässiges Objekt erkannt, wird die Mutingfunktion der für die Sensoranordnung 1 aktiviert, was durch den Leuchtmelder 22 angezeigt wird. Bei aktiver Mutingfunktion ist der Lichtvorhang 2 stummgeschaltet, das heißt gemutet und erzeugt damit keine Objektmeldungen. Ist die Mutingfunktion nicht aktiv werden mit dem Lichtvorhang 2 Objektmeldungen generiert, wenn in dessen Schutzfeld Objekte erfasst werden. Mit dieser Sensoranordnung 1 kann, wie auch mit den Sensoranordnungen 1 der Figuren 1 und 2, ein Gefahrenbereich an einer Anlage überwacht werden. Bei einer Generierung einer Objektmeldung wird die Anlage zur Vermeidung von Gefährdungen über das Schaltsignal stillgesetzt. Mit dem Not-Aus-Taster 21 kann durch einen manuellen Eingriff die Anlage stillgesetzt werden.

### Bezugszeichenliste

- (1): Sensoranordnung
- (2): Lichtvorhang
- (3): erstes Gehäuse
- (4): zweites Gehäuse
- (5): Lichtstrahlen
- (6): Sender
- (7a, 7b): Kaskade
- (7c, 7d): Kaskade
- (8): Empfänger
- (8a, 8b): Kaskade
- (8c, 8d): Kaskade
- (9): Steuereinheit
- (10): Auswerteeinheit
- (11): Ausgangsschaltung
- (12): Lichtvorhang
- (12' 12"): Lichtvorhang
- (13): Gehäuse
- (14): Kabelverbindung
- (14', 14"): Kabelverbindung
- (15): Reflektionslichtschranke
- (16): Sendelichtstrahlen
- (17): Sendeelement
- (18): Empfangslichtstrahlen
- (19): Empfangselement
- (20): Retroreflektor
- (21): Not-Aus-Taster
- (22): Leuchtmelder

## Patentansprüche

1. Sensoranordnung (1) mit einem Master-Sensor in Form eines Lichtvorhangs (2) und mit wenigstens einem Slave-Sensor in Form eines optischen Sensors, **dadurch gekennzeichnet, dass** mit dem Anschluss des Slave-Sensors an den Master-Sensor der Master-Sensor und/oder der Slave-Sensor selbsttätig konfiguriert, werden, wobei im Master-Sensor oder Slave-Sensor eine Konfiguration abgespeichert oder kodiert ist, die bei Anschluss an den Slave-Sensor oder den Master-Sensor in diesen übernommen wird, und wobei eine Konfiguration eine bestimmte Betriebsart oder eine Anzahl von Parametern umfasst.

2. Sensoranordnung nach Anspruch 1, **dadurch gekennzeichnet, dass** zwischen einem Master-Sensor und einem Slave-Sensor ein vertauschbarer Anschluss vorgesehen ist.

3. Sensoranordnung nach einem der Ansprüche 1 bis 2, **dadurch gekennzeichnet, dass** zwischen einem Master-Sensor und einem Slave-Sensor ein unverwechselbarer Anschluss vorgesehen ist.

4. Sensoranordnung nach Anspruch 3, **dadurch gekennzeichnet, dass** die Unverwechselbarkeit des Anschlusses durch mechanische Mittel oder durch Kodierungen von über den Anschluss übertragenen elektrischen Signalen gegeben ist.

5. Sensoranordnung nach einem der Ansprüche 1 bis 4, **dadurch gekennzeichnet, dass** ein Master-Sensor und ein Slave-Sensor durch einen Anschluss mechanisch oder berührungslos verbunden sind.

6. Sensoranordnung nach einem der Ansprüche 1 bis 5, **dadurch gekennzeichnet, dass** der Master-Sensor und der Slave-Sensor Sicherheitssensoren sind.

7. Sensoranordnung nah einem der Ansprüche 1 bis 6, **dadurch gekennzeichnet, dass** über den Anschluss zwischen Master-Sensor und Slave-Sensor eine sichere oder nicht sichere Datenübertragung erfolgt.

8. Sensoranordnung nach einem der Ansprüche 1 bis 7, **dadurch gekennzeichnet, dass** an den Slave-Sensor weitere Slave-Sensoren angeschlossen sind.

9. Sensoranordnung nach einem der Ansprüche 1 bis 7, **dadurch gekennzeichnet, dass** der Slave-Sensor Anschaltmittel aufweist, an welche weitere Slave-Sensoren und/oder Aktoren anschließbar sind.

10. Sensoranordnung nach einem der Ansprüche 1 bis 9, **dadurch gekennzeichnet, dass** Mittel zur Erfassung von Kenngrößen des Lichtvorhangs (12) vorgesehen sind, und dass abhängig von den erkannten Kenngrößen eine Konfiguration des Lichtvorhangs (12) selbsttätig vorgegeben wird.

11. Sensoranordnung nach Anspruch 10, **dadurch gekennzeichnet, dass** Mittel zur sicheren Erfassung von Kenngrößen vorgesehen sind.

12. Sensoranordnung nach einem der Ansprüche 10 oder 11, **dadurch gekennzeichnet, dass** die Kenngrößen von der Länge, der Auflösung, der Anschlussart oder dem Umfang vom Zubehör des Lichtvorhangs (12) gebildet sind.

## Claims

1. A sensor assembly (1) with a master sensor in the form of a light curtain (2) and with at least one slave sensor in the form of an optical sensor, **characterised in that** the master sensor and/or the slave sensor are automatically configured when the slave sensor is connected to the master sensor, wherein a configuration is stored or coded in the master sensor or slave sensor, which configuration is transferred to the slave sensor or the master sensor when connected to the latter, and wherein a configuration comprises a specific operating mode or a number of parameters.

2. The sensor assembly according to claim 1, **characterised in that** an interchangeable connection is provided between a master sensor and a slave sensor.

3. The sensor assembly according to one of claims 1 to 2, **characterised in that** a distinctive connection is provided between a master sensor and a slave sensor.

4. The sensor assembly according to claim 3, **characterised in that** the uniqueness of the connection is given by mechanical means or by coding of electrical signals transmitted via the connection.

5. The sensor assembly according to one of claims 1 to 4, **characterised in that** a master sensor and a slave sensor are connected mechanically or contactlessly by a connection.

6. The sensor assembly according to one of claims 1 to 5, **characterised in that** the master sensor and the slave sensor are safety sensors.

7. The sensor assembly according to one of the requirements 1 to 6, **characterised by** the fact that a secure or non-secure data transmission takes place via the connection between master sensor and slave sensor.

8. The sensor assembly according to one of claims 1 to 7, **characterised in that** further slave sensors are connected to the slave sensor.

9. The sensor assembly according to one of claims 1 to 8, **characterised in that** the slave sensor has connecting means to which further slave sensors and/or actuators can be connected.

10. The sensor assembly according to one of claims 1 to 9, **characterised in that** means are provided for detecting characteristic values of the light curtain (12), and **in that** a configuration of the light curtain (12) is automatically preset depending on the detected characteristic values.

11. The sensor assembly according to claim 10, **characterised in that** means are provided for reliable detection of characteristic values.

12. The sensor assembly according to one of claims 10 or 11, **characterised in that** the parameters of length, resolution, type of connection or circumference are formed by the accessories of the light curtain (12).

## Revendications

1. Dispositif de détection (1) avec un capteur principal sous la forme d'un rideau lumineux (2) et avec au moins un capteur secondaire sous la forme d'un capteur optique, **caractérisé en ce que** le capteur principal et/ou le capteur secondaire sont configurés automatiquement lorsque le capteur secondaire est relié au capteur principal, une configuration étant mémorisée ou codée dans le capteur principal ou le capteur secondaire, laquelle configuration est transmise au capteur secondaire ou au capteur principal lorsqu'il est relié à ce dernier, et une configuration comprenant un mode de fonctionnement spécifique ou un certain nombre de paramètres.

2. Dispositif de détection selon la revendication 1, **caractérisé en ce qu'**une connexion interchangeable est prévue entre un capteur maître et un capteur esclave.

3. Dispositif de détection selon l'une des revendications 1 à 2, **caractérisé en ce qu'**une connexion distinctive est prévue entre un capteur maître et un capteur esclave.

4. Dispositif de détection selon la revendication 3, **caractérisé en ce que** l'unicité de la connexion est donnée par des moyens mécaniques ou par le codage des signaux électriques transmis par la connexion.

5. Dispositif de détection selon l'une des revendications 1 à 4, **caractérisé en ce qu'**un capteur maître et un capteur esclave sont reliés mécaniquement ou sans contact par une connexion.

6. Dispositif de détection selon l'une des revendications 1 à 5, **caractérisé en ce que** le capteur maître et le capteur esclave sont des capteurs de sécurité.

7. Dispositif de détection selon l'une des exigences 1 à 6, **caractérisé par le fait qu'**une transmission de données sécurisée ou non sécurisée a lieu via la connexion entre le capteur maître et le capteur esclave.

8. Dispositif de détection selon l'une des revendications 1 à 7, **caractérisé en ce que** d'autres capteurs esclaves sont connectés au capteur esclave.

9. Dispositif de détection selon l'une des revendications 1 à 8, **caractérisé en ce que** le capteur esclave possède des moyens de connexion auxquels d'autres capteurs et/ou actionneurs esclaves peuvent être connectés.

10. Dispositif de détection selon l'une des revendications 1 à 9, **caractérisé en ce que** des moyens sont prévus pour détecter des valeurs caractéristiques du rideau lumineux (12), et **en ce qu'**une configuration du rideau lumineux (12) est automatiquement préréglée en fonction des valeurs caractéristiques détectées.

11. Dispositif de détection selon la revendication 10, **caractérisé en ce que** des moyens sont prévus pour une détection fiable des valeurs caractéristiques.

12. Dispositif de détection selon l'une des revendications 10 ou 11, **caractérisé en ce que** les paramètres de longueur, de résolution, de type de connexion ou de circonférence sont formés par les accessoires du rideau lumineux (12).
